# EUROPÄISCHE PATENTSCHRIFT

(11) **EP 2 941 309 B1**
(45) Veröffentlichungstag und Bekanntmachung des Hinweises auf die Patenterteilung: **15.08.2018**
(21) Anmeldenummer: 13798250.0
(22) Anmeldetag: 19.11.2013
(51) Int. Cl.: B01D 3/20

(54) **STOFFAUSTAUSCHBODEN**
MASS TRANSFER TRAY
PLATEAU D'ÉCHANGE DE MATIÈRE

(30) Priorität: 24.06.2013 DE 102013010625
(43) Veröffentlichungstag der Anmeldung: 11.11.2015
(73) Patentinhaber: JULIUS MONTZ GmbH, D-40723 Hilden (DE)
(72) Erfinder: JANSEN, Helmut, 41542 Dormagen (DE); RIETFORT, Thomas, 46236 Bottrop (DE)
(74) Vertreter: Cohausz Hannig Borkowski Wißgott
(86) Internationale Anmeldenummer: PCT/EP2013/003476
(87) Internationale Veröffentlichungsnummer: WO 2014/206433

(56) Entgegenhaltungen:
- DE-A1- 19 622 955
- DE-C- 766 545
- FR-A- 1 082 959
- GB-A- 829 894
- US-A- 803 394
- US-A- 2 627 397
- US-A- 2 692 128
- US-A- 2 747 849
- US-A- 3 022 054
- US-A- 3 025 041
- US-A- 4 578 153
- US-A- 4 711 745
- US-A1- 2004 097 756

## Beschreibung

Die Erfindung betrifft einen Stoffaustauschboden einer Kolonne mit einem Flüssigkeitszulauf auf der Bodenzulaufseite und einem Flüssigkeitsablauf auf der gegenüberliegenden Bodenablaufseite, und mit mehreren, zwischen Zu- und Ablauf quer zur Flüssigkeitsfließrichtung im Boden zueinander parallel angeordneten profilförmigen Rinnen mit U-förmigem Querschnitt, die zwischen sich Gasdurchtrittsschlitze bilden, die von länglichen profilförmigen Hauben überdeckt sind, die einen auf den Kopf gestellten U-förmigen Querschnitt aufweisen, wobei die Seitenwände der Rinnen in die Hauben hineinreichen, so dass die Rinnenseitenwände von den Haubenseitenwänden um eine Höhe überdeckt sind, die kleiner ist als die Höhe der Rinnenseitenwände und die Höhe der Haubenseitenwände.

Ein solcher Stoffaustauschboden ist aus der DE 102 43 625 A1 bekannt und in der beiliegenden Fig. 1 dargestellt. Bei diesen bekannten Stoffaustauschböden hat es sich gezeigt, dass die sich über dem Boden ausbildende Sprudelschicht ungleichmäßig und oft lückenhaft ist, so dass ein ungenügender Wirkungsgrad besteht. Ferner ist es aus der US3025041 bekannt, den Stoffaustauschboden einer Kolonne mit kreisrunden Öffnungen zu versehen, die jeweils von einer Rohrbuchse umgeben sind, die von einem Deckel abgedeckt sind. Aufgabe der Erfindung ist es, einen Stoffaustauschboden der eingangs genannten Art so zu verbessern, dass der Wirkungsgrad für die gesamte Fläche des Stoffaustauschbodens gleichmäßig ist und damit eine hohe Effektivität erreicht wird.

Diese Aufgabe wird erfindungsgemäß dadurch gelöst, dass in den Rinnen die Flüssigkeit abwechselnd in entgegengesetzten Richtungen fließt, so dass in jeder zweiten Rinne die Flüssigkeit in einer Richtung und in den dazwischen liegenden Rinnen die Flüssigkeit in der entgegengesetzten Richtung fließt, und dass bei den Rinnen und Hauben, die der Bodenzulaufseite näher sind, die Hauben gegenüber den Rinnen höher gesetzt und damit die Überdeckungshöhen kleiner sind als bei den Rinnen und Hauben, die der Bodenablaufseite näher sind und dass in den Gaszulaufbereichen zu den Gasdurchtrittsschlitzen unterhalb des Bodens jeweils mindestens ein Drosselelement am Boden befestigt ist, deren drosselnde(n) Durchtrittsöffnung(en) bei den der Bodenzulaufseite näher gelegenen Gasdurchtrittsschlitzen größer ist als bei den der Bodenablaufseite näher liegenden.

Durch die lange Führung der Flüssigkeit schlangenförmig nacheinander über alle Rinnen wird die Flüssigkeit wesentlich länger über demselben Boden gehalten, so dass ein stärkerer Stoffaustausch erreicht wird. Darüber hinaus wird der Stoffaustausch durch die abnehmende Höhe der Hauben noch intensiver und gleichmäßiger durchführbar.

Hierbei wird vorgeschlagen, dass von der Bodenzulaufseite zur Bodenablaufseite die Höhen der Hauben gegenüber den Rinnen kontinuierlich oder diskontinuierlich abnehmen und die Überdeckungshöhen kontinuierlich zunehmen.

Eine zusätzliche Lösung besteht darin, dass bei den der Bodenzulaufseite näher gelegenen Gasdurchtrittsschlitzen die Schlitzbreite größer ist als bei den Gasdurchtrittsschlitzen, die der Bodenablaufseite näher liegen. Hierzu wird vorgeschlagen, dass von der Bodenzulaufseite zur Bodenablaufseite die Schlitzbreite kontinuierlich oder diskontinuierlich abnimmt.

Eine weitere zusätzliche Lösung besteht darin, dass die unteren Ränder der Haubenwände eine Vielzahl sich nach unten öffnender Haubenschlitze oder Öffnungen aufweisen, deren Höhe und/oder Breite bei den der Bodenzulaufseite näher gelegenen Hauben größer ist als bei den der Bodenablaufseite näher gelegenen Hauben. Hierzu wird vorgeschlagen, dass von der Bodenzulaufseite zur Bodenablaufseite die Höhe und/oder Breite der Haubenschlitze kontinuierlich oder diskontinuierlich abnimmt.

Hierzu wird auch vorgeschlagen, dass von der Bodenzulaufseite zur Bodenablaufseite die Größe der Durchtrittsöffnungen der Drosselelemente kontinuierlich oder diskontinuierlich abnimmt. Von Vorteil ist, wenn die Höhe der Rinnenseitenwände bei gleicher Haubenausführung/Anordnung von der Bodenzulaufseite zur Bodenablaufseite hin abnimmt.

Bei diesen Lösungen wird der wesentliche Vorteil erreicht, dass der Durchströmungswiderstand des von unten nach oben den Stoffaustauschboden durchströmenden Gases über die gesamte Fläche des Stoffaustauschbodens gleich groß ist, obwohl die Höhe des Flüssigkeitsstandes auf der Oberseite des Stoffaustauschbodens von der Bodenzulaufseite zur Bodenablaufseite abnimmt. Eine solche Vergleichmäßigung des Durchströmungswiderstandes führt dazu, dass die Sprudelschicht über die gesamte Fläche des Stoffaustauschbodens gleichmäßig und ohne Lücken ist, so dass der Wirkungsgrad über die gesamte Fläche des Bodens gleichmäßig ist und damit der Boden eine hohe Effektivität besitzt.

Ausführungsbeispiele der Erfindung sind in den Zeichnungen dargestellt und werden im Folgenden näher beschrieben. Es zeigen
- Fig. 1: eine perspektivische Darstellung eines Stoffaustauschbodens des Standes der Technik,
- Fig. 2: einen senkrechten Schnitt durch einen Stoffaustauschboden entsprechend einer ersten erfindungsgemäßen Lösung,
- Fig. 3: eine perspektivische Ansicht eines Teils eines Stoffaustauschbodens entsprechend einer weiteren erfindungsgemäßen Verbesserung.

Der erfindungsgemäße Stoffaustauschboden 1 wird in einer Kolonne waagerecht eingesetzt, wobei mehrere Böden 1 übereinander in Abständen gesetzt werden. Auf jedem Boden befindet sich eine Flüssigkeitsschicht 2, die durch Gasdurchtrittsschlitze 3 von Gas 4 von unten durchströmt wird. Hierdurch bildet sich oberhalb des Bodens 1 eine Sprudelschicht aus Flüssigkeit und Gasblasen, in der der Stoffaustausch stattfindet. Die Flüssigkeit fließt auf einer Seite (Zulaufseite A) am Rand des Bodens 1 auf den Boden, um über den gesamten Boden zu strömen und auf der anderen Seite (Ablaufseite B) am Rand des Bodens abzufließen, um zum darunter befindlichen Boden zu gelangen.

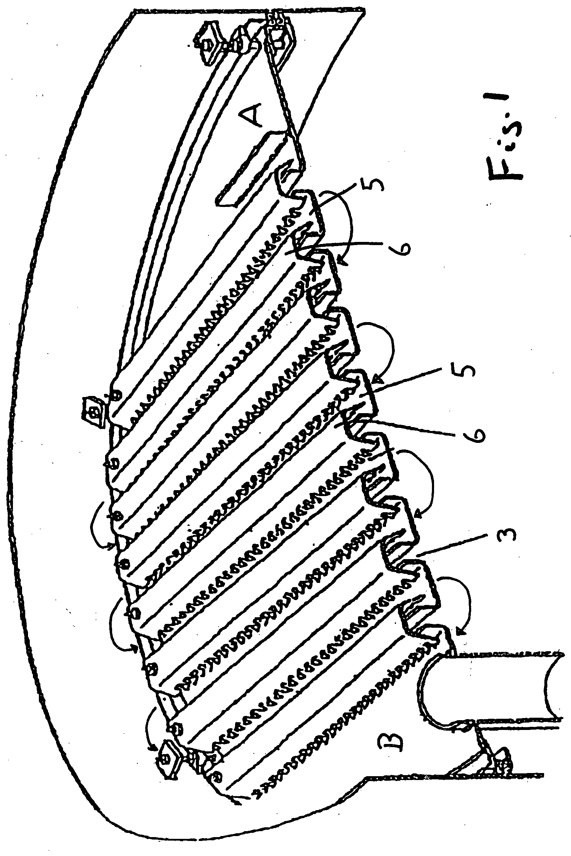

Der Boden ist zwischen der Zulaufseite A und der Ablaufseite B aus mehreren, zueinander parallelen, im Querschnitt U-förmigen profilförmigen Rinnen 5 zusammengesetzt, die zwischen sich die zueinander parallelen Gasdurchtrittsschlitze 3 bilden. Hierbei bilden die einander zugewandten, benachbarten, senkrechten Seitenwände 5a, 5b zweier Rinnen die Seitenwände der Gasdurchtrittsschlitze 3. Hierbei ist von Bedeutung, dass in den Rinnen 5 die Flüssigkeit abwechselnd in entgegengesetzten Richtungen fließt, so dass in jeder zweiten Rinne 5 die Flüssigkeit in einer Richtung und in den dazwischen liegenden Rinnen 5 die Flüssigkeit in der entgegengesetzten Richtung fließt. Die in Fig. 1 eingezeichneten Pfeile zeigen den Flüssigkeitsverlauf in den Rinnen 5 und zwischen den Hauben 6.

Über jeden Gasdurchtrittsschlitz 3 ist eine längliche profilförmige Haube 6 gestülpt mit einem auf den Kopf gestellten U-förmigen Querschnitt. Hierbei ragen die senkrechten Seitenwände 6a, 6b jeder Haube in die Zwischen- bzw. Innenräume zweier benachbarter Rinnen 5 hinein, so dass die unteren Enden der Haubenseitenwände 6a, 6b tiefer liegen als die oberen Enden der Rinnenseitenwände 5a, 5b. Somit besteht eine Überdeckung der Haubenseitenwände 6a, 6b mit den Rinnenseitenwänden 5a, 5b mit der Höhe H.

Da die Breite BH der gegenüber den Rinnen 5 mittig angeordneten Hauben 6 größer ist als die Schlitzbreite B3 wird das durch den Schlitz 3 nach oben strömende Gas durch die Haube zu zwei Seiten umgelenkt in die Zwischenräume Z1 und Z2 zwischen die Hauben- und Rinnenwände, um dort nach unten zu strömen über den unteren Rand der Haubenwände 6a, 6b herum und um von dort dann wieder nach oben zur Oberfläche OF der Flüssigkeit zu strömen.

Die unteren Ränder der Haubenseitenwände 6a, 6b weisen senkrechte Haubenschlitze 6c auf, durch die das Gas in die Zwischenräume zwischen den Hauben austritt. Hierbei können die Schlitze 6c schräge Leitflächen aufweisen, die dem Gas und der Flüssigkeit eine Strömungsrichtung geben.

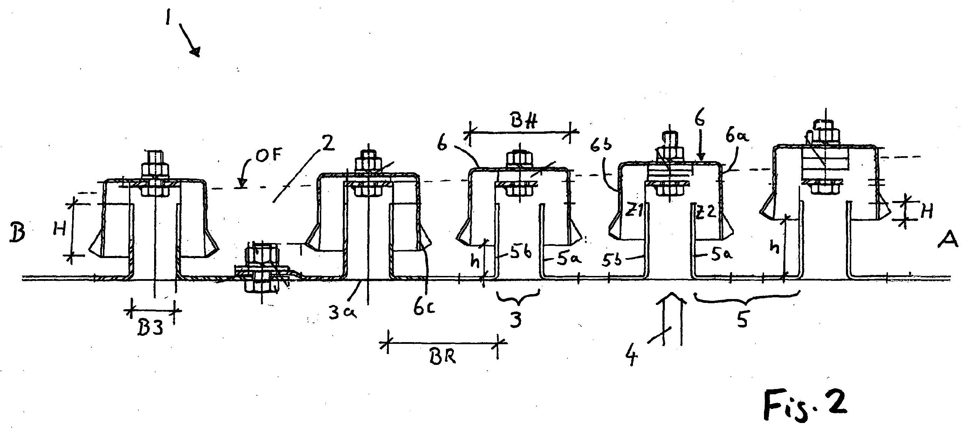

Die Höhe HF der auf dem Boden 1 befindlichen Flüssigkeitsschicht nimmt von der Zulaufseite A zur Ablaufseite B ab und entsprechend sind in einer ersten, in Fig. 2 dargestellten Lösung die der Zulaufseite A näheren Hauben 6 höher gesetzt als die der Ablaufseite näheren Hauben. Damit ist auch die Überdeckung H von Hauben- und Seitenwänden nahe der Zulaufseite A kleiner als nahe der Ablaufseite B. Vorzugsweise ist dafür gesorgt, dass von der Bodenzulaufseite A zur Bodenablaufseite B die Höhen H der Hauben 6 gegenüber den Rinnen 5 kontinuierlich abnehmen und die Überdeckungshöhen H kontinuierlich zunehmen.

In einer zweiten Lösung, die zusätzlich zur ersten Lösung besteht, ist die Breite B3 der Gasdurchtrittsschlitze 3 unterschiedlich, d. h. deren Breite nimmt von der Zulaufseite A zur Ablaufseite B insbesondere kontinuierlich ab. Somit sind die Dampfkamine nahe dem Zulauf breiter und nach dem Ablauf enger, so dass wiederum in der dickeren Flüssigkeitsschicht näher dem Zulauf mehr Gas zum Durchdringen zur Verfügung steht als in der dünneren nahe dem Ablauf.

In einer dritten Ausführung wird dieser Effekt dadurch erzielt, dass die am unteren Rand der Haubenwände angeordneten Haubenschlitze 6c in ihrer insbesondere in ihrer Höhe und/oder Breite von der Zulaufseite A zur Ablaufseite insbesondere kontinierlich abnehmen. Dies erfolgt wiederum zusätzlich zu der ersten oder zweiten Lösung, um mehr Gas bei der höheren Flüssigkeitsschicht zur Verfügung zu haben.

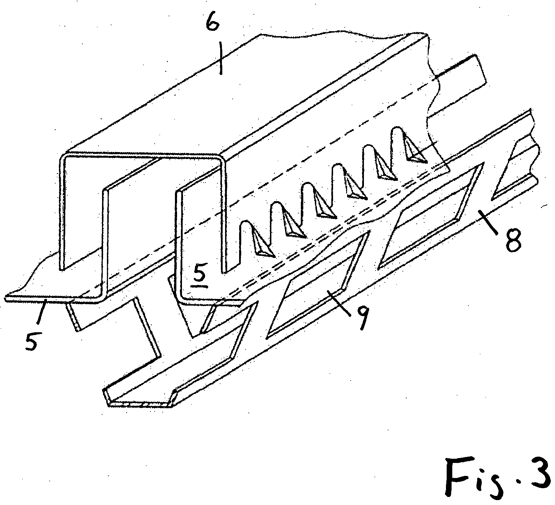

Bei einer vierten zusätzlichen Ausführung (Fig. 3) ist unterhalb des Bodens 1 bzw. der unteren Bodenfläche und damit an der Unterseite jeweils zweier Rinnen 5 ein Drosselelement 8 befestigt, das jeweils den unteren Eingangsschlitz 3a des Gasdurchtrittsschlitzes überdeckt. Jedes insbesondere profilförmige, zu den Rinnen und Hauben parallele Drosselelement weist Durchgangsöffnungen 9 auf, durch die die Gasmenge bestimmt wird, die in die Gasdurchtrittsschlitze 3 gelangt. Hierbei ist dafür gesorgt, dass die Größe und/oder Anzahl der Gasdurchtrittsöffnungen der Drosselelemente nahe der Zulaufseite A größer ist als nahe der Ablaufseite B, wobei dies wiederum kontinuierlich ausgeführt ist. Auch diese Lösung hat zur Folge, dass wiederum in der dickeren Flüssigkeitsschicht näher dem Zulauf mehr Gas zum Durchdringen zur Verfügung steht als in der dünneren nahe dem Ablauf.

## Patentansprüche

1. Stoffaustauschboden (1) einer Kolonne mit einem Flüssigkeitszulauf auf der Bodenzulaufseite (A) und einem Flüssigkeitsablauf auf der gegenüberliegenden Bodenablaufseite (B), und mit mehreren, zwischen Zu- und Ablauf quer zur Flüssigkeitsfließrichtung im Boden zueinander parallel angeordneten profilförmigen Rinnen (5) mit U-förmigem Querschnitt, die zwischen sich Gasdurchtrittsschlitze (3) bilden, die von länglichen profilförmigen Hauben (6) überdeckt sind, die einen auf den Kopf gestellten U-förmigen Querschnitt aufweisen, wobei die Seitenwände (5a, 5b) der Rinnen (5) in die Hauben (6) hineinreichen, so dass die Rinnenseitenwände (5a, 5b) von den Haubenseitenwänden (6a, 6b) um eine Höhe (H) überdeckt sind, die kleiner ist als die Höhe der Rinnenseitenwände und die Höhe der Haubenseitenwände, **dadurch gekennzeichnet, dass** in den Rinnen (5) die Flüssigkeit abwechselnd in entgegengesetzten Richtungen fließt, so dass in jeder zweiten Rinne (5) die Flüssigkeit in einer Richtung und in den dazwischen liegenden Rinnen (5) die Flüssigkeit in der entgegengesetzten Richtung fließt, und dass bei den Rinnen (5) und Hauben (6), die der Bodenzulaufseite (A) näher sind, die Hauben (6) gegenüber den Rinnen (5) höher gesetzt und damit die Überdeckungshöhen (H) kleiner sind als bei den Rinnen und Hauben, die der Bodenablaufseite (B) näher sind und dass in den Gaszulaufbereichen zu den Gasdurchtrittsschlitzen (3) unterhalb des Bodens jeweils mindestens ein Drosselelement (8) am Boden befestigt ist, deren drosselnde(n) Durchtrittsöffnung(en) bei den der Bodenzulaufseite (A) näher gelegenen Gasdurchtrittsschlitzen (3) größer ist als bei den der Bodenablaufseite (B) näher liegenden.

2. Stoffaustauschboden nach Anspruch 1, **dadurch gekennzeichnet, dass** von der Bodenzulaufseite (A) zur Bodenablaufseite (B) die Höhen (H) der Hauben (6) gegenüber den Rinnen (5) kontinuierlich oder diskontinuierlich abnehmen und die Überdeckungshöhen (H) kontinuierlich zunehmen.

3. Stoffaustauschboden nach Anspruch 1 oder 2, **dadurch gekennzeichnet, dass** in den Rinnen (5) die Flüssigkeit abwechselnd in entgegengesetzten Richtungen fließt, so dass in jeder zweiten Rinne (5) die Flüssigkeit in einer Richtung und in den dazwischen liegenden Rinnen (5) die Flüssigkeit in der entgegengesetzten Richtung fließt, und dass bei den der Bodenzulaufseite (A) näher gelegenen Gasdurchtrittsschlitzen (3) die Schlitzbreite (B3) größer ist als bei den Gasdurchtrittsschlitzen, die der Bodenablaufseite (B) näher liegen.

4. Stoffaustauschboden nach Anspruch 3, **dadurch gekennzeichnet, dass** von der Bodenzulaufseite (A) zur Bodenablaufseite (B) die Schlitzbreite (B3) kontinuierlich oder diskontinuierlich abnimmt.

5. Stoffaustauschboden nach einem der vorherigen Ansprüche, **dadurch gekennzeichnet, dass** in den Rinnen (5) die Flüssigkeit abwechselnd in entgegengesetzten Richtungen fließt, so dass in jeder zweiten Rinne (5) die Flüssigkeit in einer Richtung und in den dazwischen liegenden Rinnen (5) die Flüssigkeit in der entgegengesetzten Richtung fließt, und dass die unteren Ränder der Haubenwände (6a, 6b) eine Vielzahl sich nach unten öffnender Haubenschlitze (6c) oder Öffnungen aufweisen, deren Höhe und/oder Breite bei den der Bodenzulaufseite (A) näher gelegenen Hauben (6) größer ist als bei den der Bodenablaufseite (B) näher gelegenen Hauben.

6. Stoffaustauschboden nach Anspruch 5, **dadurch gekennzeichnet, dass** von der Bodenzulaufseite (A) zur Bodenablaufseite (B) die Höhe und/oder Breite der Haubenschlitze (6c) kontinuierlich oder diskontinuierlich abnimmt.

7. Stoffaustauschboden nach einem der vorherigen Ansprüche, **dadurch gekennzeichnet, dass** von der Bodenzulaufseite (A) zur Bodenablaufseite (B) die Größe der Durchtrittsöffnungen der Drosselelemente kontinuierlich oder diskontinuierlich abnimmt.

8. Stoffaustauchboden nach einem der vorherigen Ansprüche, **dadurch gekennzeichnet, dass** die Höhe der Rinnenseitenwände (5a, 5b) bei gleicher Haubenausführung/Anordnung (6) von der Bodenzulaufseite zur Bodenablaufseite hin abnimmt.

## Claims

1. Mass transfer tray (1) of a column, having a liquid inlet on the tray inlet side (A) and a liquid outlet on the opposite tray outlet side (B), and having multiple profiled channels (5) of U-shaped cross section, which are arranged parallel to one another in the tray between the inlet and outlet transverse to the liquid flow direction and which form between them gas passage slots (3) which are covered by elongate profiled covers (6) which have an upside-down U-shaped cross section, wherein the side walls (5a, 5b) of the channels (5) extend into the covers (6) such that the channel side walls (5a, 5b) are covered by the cover side walls (6a, 6b) by a height (H) which is smaller than the height of the channel side walls and the height of the cover side walls, **characterized in that** the liquid flows alternately in opposite directions in the channels (5) such that the liquid flows in one direction in every second channel (5) and the liquid flows in the opposite direction in the channels (5) situated therebetween, and **in that** the covers (6) are placed higher relative to the channels (5), and thus the covering heights (H) are smaller, at the channels (5) and covers (6) which are closer to the tray inlet side (A) than at the channels and covers which are closer to the tray outlet side (B), and **in that**, in the gas inlet regions to the gas passage slots (3), there is in each case at least one throttle element (8) fastened to the tray below the tray, the throttling passage opening(s) of which element(s) is/are larger at the gas passage slots (3) situated closer to the tray inlet side (A) than at the gas passage slots situated closer to the tray outlet side (B).

2. Mass transfer tray according to Claim 1, **characterized in that** the heights (H) of the covers (6) in relation to the channels (5) decrease in a continuous or discontinuous manner, and the covering heights (H) increase in a continuous manner, from the tray inlet side (A) to the tray outlet side (B).

3. Mass transfer tray according to Claim 1 or 2, **characterized in that** the liquid flows alternately in opposite directions in the channels (5) such that the liquid flows in one direction in every second channel (5) and the liquid flows in the opposite direction in the channels (5) situated therebetween, and **in that** the slot width (B3) is greater at the gas passage slots (3) which are situated closer to the tray inlet side (A) than at the gas passage slots which are situated closer to the tray outlet side (B).

4. Mass transfer tray according to Claim 3, **characterized in that** the slot width (B3) decreases in a continuous or discontinuous manner from the tray inlet side (A) to the tray outlet side (B).

5. Mass transfer tray according to one of the preceding claims, **characterized in that** the liquid flows alternately in opposite directions in the channels (5) such that the liquid flows in one direction in every second channel (5) and the liquid flows in the opposite direction in the channels (5) situated therebetween, and **in that** the lower edges of the cover walls (6a, 6b) have a multiplicity of downwardly opening cover slots (6c), or openings, whose height and/or width is greater at the covers (6) which are situated closer to the tray inlet side (A) than at the covers which are situated closer to the tray outlet side (B).

6. Mass transfer tray according to Claim 5, **characterized in that** the height and/or width of the cover slots (6c) decreases in a continuous or discontinuous manner from the tray inlet side (A) to the tray outlet side (B).

7. Mass transfer tray according to one of the preceding claims, **characterized in that** the size of the passage openings of the throttle elements decreases in a continuous or discontinuous manner from the tray inlet side (A) to the tray outlet side (B).

8. Mass transfer tray according to one of the preceding claims, **characterized in that**, with the same cover design/arrangement (6), the height of the channel side walls (5a, 5b) decreases from the tray inlet side to the tray outlet side.

## Revendications

1. Plateau d'échange de matière (1) d'une colonne avec une arrivée de liquide sur le côté d'arrivée du plateau (A) et une évacuation de liquide sur le côté opposé d'évacuation du plateau (B), et avec plusieurs chenaux profilés (5) avec une section transversale en forme de U disposés parallèlement les uns aux autres entre l'arrivée et l'évacuation transversalement à la direction d'écoulement du liquide dans le plateau, qui forment entre eux des fentes de passage de gaz (3), qui sont recouvertes par des hottes profilées allongées (6), qui présentent une section transversale en forme de U inversé, dans lequel les parois latérales (5a, 5b) des chenaux (5) pénètrent dans les hottes (6), de telle manière que les parois latérales des chenaux (5a, 5b) soient recouvertes par les parois latérales des hottes (6a, 6b), sur une hauteur (H), qui est plus petite que la hauteur des parois latérales des chenaux et que la hauteur des parois latérales des hottes, **caractérisé en ce que** le liquide s'écoule alternativement dans des directions opposées dans les chenaux (5), de telle manière que dans un chenal sur deux (5) le liquide s'écoule dans une direction et que dans les chenaux (5) situés entre ceux-ci le liquide s'écoule dans la direction opposée, et **en ce que** pour les chenaux (5) et les hottes (6), qui sont plus proches du côté d'arrivée du plateau (A), les hottes (6) sont placées plus haut par rapport aux chenaux (5) et dès lors les hauteurs de recouvrement sont plus petites que pour les chenaux et les hottes qui sont plus proches du côté d'évacuation du plateau (B) et **en ce que** dans les régions d'arrivée de gaz aux fentes de passage de gaz (3) chaque fois au moins un élément d'étranglement (8) est fixé au plateau en dessous du plateau, dont la/les ouvertures d'étranglement est/sont plus grande(s) pour les fentes de passage de gaz (2) situées plus près du côté d'arrivée du plateau (A) que pour celles qui sont situées plus près du côté d'évacuation du plateau (B).

2. Plateau d'échange de matière selon la revendication 1, **caractérisé en ce que** les hauteurs (H) des hottes (6) par rapport aux chenaux (5) diminuent de façon continue ou discontinue du côté d'arrivée du plateau (A) au côté d'évacuation du plateau (B) et les hauteurs de recouvrement (H) augmentent de façon continue.

3. Plateau d'échange de matière selon la revendication 1 ou 2, **caractérisé en ce que** le liquide s'écoule alternativement dans des directions opposées dans les chenaux (5), de telle manière que dans un chenal sur deux (5) le liquide s'écoule dans une direction et que dans les chenaux (5) situés entre ceux-ci le liquide s'écoule dans la direction opposée, et **en ce que** pour les fentes de passage de gaz (3), qui sont situées plus près du côté d'arrivée du plateau (A), la largeur des fentes (B3) est plus grande que pour les fentes de passage de gaz, qui sont situées plus près du côté d'évacuation du plateau (B) .

4. Plateau d'échange de matière selon la revendication 3, **caractérisé en ce que** la largeur des fentes (B3) diminue de façon continue ou discontinue du côté d'arrivée du plateau (A) au côté d'évacuation du plateau (B) .

5. Plateau d'échange de matière selon l'une quelconque des revendications précédentes, **caractérisé en ce que** le liquide s'écoule alternativement dans des directions opposées dans les chenaux (5), de telle manière que dans un chenal sur deux (5) le liquide s'écoule dans une direction et que dans les chenaux (5) situés entre ceux-ci le liquide s'écoule dans la direction opposée, et **en ce que** les bords inférieurs des parois de hotte (6a, 6b) présentent une multiplicité de fentes de hotte (6c) ou d'ouvertures ouvertes vers le bas, dont la hauteur et/ou la largeur est plus grande pour les hottes (6) qui sont situées plus près du côté d'arrivée du plateau (A) que pour celles qui sont situées plus près du côté d'évacuation du plateau (B).

6. Plateau d'échange de matière selon la revendication 5, **caractérisé en ce que** la hauteur et/ou la largeur des fentes de hotte (6c) diminue de façon continue ou discontinue du côté d'arrivée du plateau (A) au côté d'évacuation du plateau (B).

7. Plateau d'échange de matière selon l'une quelconque des revendications précédentes, **caractérisé en ce que** la grandeur des ouvertures de passage des éléments d'étranglement diminue de façon continue ou discontinue du côté d'arrivée du plateau (A) au côté d'évacuation du plateau (B).

8. Plateau d'échange de matière selon l'une quelconque des revendications précédentes, **caractérisé en ce que** la hauteur des parois latérales de chenal (5a, 5b) diminue du côté d'arrivée du plateau (A) au côté d'évacuation du plateau (B) pour une même réalisation/disposition des hottes (6).
